# EUROPEAN PATENT APPLICATION

(11) **EP 1 892 985 A1**
(43) Date of publication of application: **27.02.2008**
(21) Application number: 06119596.2
(22) Date of filing: 25.08.2006
(51) Int. Cl.: H04Q 7/38

(54) **Method and System for Managing Trial Service Subscriptions for a Mobile Communications Device**

(71) Applicant: Research In Motion Limited, Waterloo, Ontario N2L 3W8 (CA)
(72) Inventor: Chin, Jia-Lin, Scarborough Ontario M1W 3C6 (CA)
(74) Representative: Rickard, David John

(57) **Abstract**

A method and system for managing trial service subscriptions for a user of a mobile communications device in a communications network. The system and method provide the capability to allocate one or more trial services to the mobile communications device of a new user. A new user includes a subscriber having an active billing identifier and an identification record (e.g. a SIM) that was created within a grace period, or a subscriber that is currently deactivated but has a SIM record that is created within a grace period. A new user can also include a subscriber changing to a new mobile communications device and registering within a grace period.

## Description

The present invention relates generally to communications networks, and more particularly, to a method and system for managing trial service subscriptions for a mobile communication device in a wireless packet data service network.

The use of mobile communication devices continues to grow, and so does the array of services offered by service providers and carriers. Service providers are able to provide users, i.e. subscribers, with both voice and data communication services. Data services for mobile communication devices typically utilize wireless packet data service networks for the data transfer sessions.

With the growth of mobile communication devices market, new subscribers are often given a trial service offer by the service providers and/or carriers. Increasing competition and market differentiation is giving rise to the need for more flexibility in the activation and management of trial service subscriptions. Accordingly, there remains a need for improvements in the art.

### GENERAL

The present invention may comprise a method for managing trial service subscriptions for a user of a mobile communication device in a communications network.

The present invention may comprise a system for managing trial service subscriptions for a user of a mobile communication device in a communications network.

According to one embodiment, there is preferably provided a method for activating a trial service for a user of a mobile communications device, the method comprises the steps of: determining if the user is a new user; providing a trial service if the user qualifies as a new user; and wherein qualifying the user as a new user comprises determining if there is a billing identifier for the user in a provisioning system, and if an identification record was created for the user within a grace period.

According to another embodiment, there is preferably provided a system for allocating a trial service to a user of a mobile communication device, the system comprises: means for registering the user with a provisioning system in a communications network; means for determining if the user is associated with a new subscription; means for providing a trial service for the user if the subscription is new; and wherein said new subscription comprises a billing identifier for the user in the provisioning system, and an identification record being created for the user within a grace period.

According to another embodiment, there is preferably provided a computer program product for managing a trial service for a user of a mobile communications device, the trial service and other services being allocated via a provisioning system, the computer program product comprises: a medium for storing computer-readable instructions; the computer-readable instructions including, determining if the user is a new user, by checking if there is a billing identifier for the user in the provisioning system and if an identification record was created for the user within a predetermined period of time; and providing a trial service if the user qualifies as a new user.

According to yet another embodiment, there is preferably provided a method for managing a trial service for a mobile communication device via a provisioning system, the method comprising the steps of: receiving a registration request from the device; determining whether the device is active in the provisioning system; if the device is not active, determining whether an identification record was created for the device within a predetermined period; and if the identification record was created within the predetermined period, associating a trial service with the device.

Other aspects, features and embodiments of the present invention will become apparent to those ordinarily skilled in the art upon review of the following description of embodiments of the invention in conjunction with the accompanying figures.

### BRIEF DESCRIPTION OF THE DRAWINGS

Reference will now be made to the accompanying drawings which show, by way of example, embodiments of the present invention, and in which:

Fig. 1 shows in diagrammatic form an exemplary network environment including a wireless packet data service network suitable for operating an embodiment according to the present application;

Fig. 2 shows in diagrammatic form additional details of an exemplary relay network for operating a mobile communications device in accordance with an embodiment; and

Fig. 3 shows in flowchart form a process for managing trial service for a mobile communications device subscriber according to an embodiment.

Like reference numerals indicate like or corresponding elements in the drawings.

### DESCRIPTION OF PREFERRED EMBODIMENTS

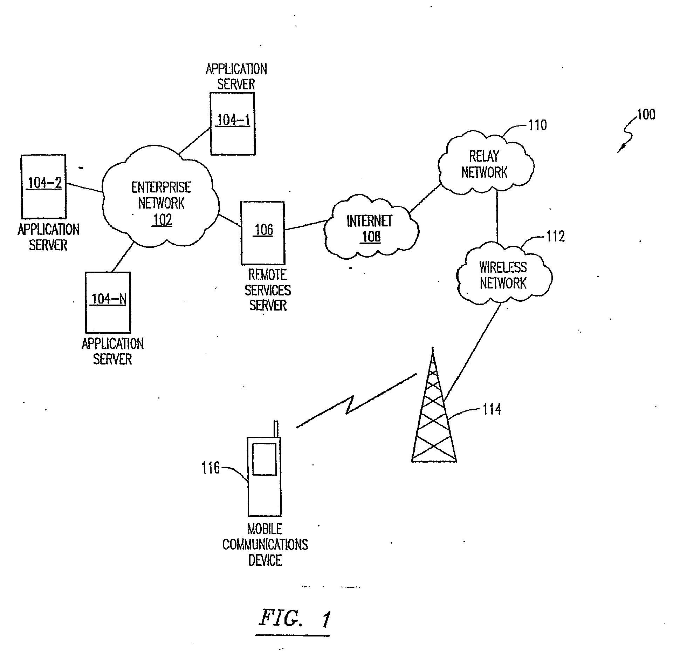

Reference is first made to Fig. 1, which shows in diagrammatic form an exemplary network environment or communications network 100 including a wireless packet data service network 112 wherein an embodiment as described herein may be practiced. An enterprise network 102, which may be a packet-switched network, can include one or more geographic sites and be organized, for example, as a local area network (LAN), wide area network (WAN) or a metropolitan area network (MAN), for serving a plurality of users. A number of application servers 104-1 through 104-N disposed as part of the enterprise network 102 are operable to provide or effectuate a host of internal and external services such as email, video mail, Internet access, corporate data access, messaging, calendaring and scheduling, information management and the like. Accordingly, a diverse array of personal information devices or appliances, 104-i, where i=1,2,....,N, with respect to the services supported in the enterprise network 102.

Additionally, a remote services server 106 may be interfaced with the enterprise network 102 for enabling a user, for example a corporate user, to access or effectuate any of the services from a remote location using a suitable mobile communications device (MCD) 116. A secure communication link with end-to-end encryption may be established that is mediated through an external IP network, e.g. a public packet-switched network such as the Internet 108, as well as the wireless packet data service network 112 operable with the mobile communications device 116 via a suitable wireless network infrastructure that includes a base station (BS) 114. In one embodiment, a trusted relay network 110 may be disposed between the Internet 108 and the infrastructure of wireless packet data service network 112. In another embodiment, the infrastructure of the trusted relay network 110 may be integrated with the wireless packet data service network 112, whereby the functionality of the relay infrastructure, certain aspects of which will be described in greater detail below, is consolidated as a separate layer within a "one-network" environment. Additionally, by way of example, the MCD 116 may be a data-enabled mobile handheld device capable of receiving and sending messages, web browsing, interfacing with corporate application servers, etc., regardless of the relationship between the networks 110 and 112. Accordingly, a "network node" may include both relay functionality and wireless network infrastructure functionality in some exemplary implementations.

For purposes of the present discussion, the wireless packet data service network 112 may be implemented in any known or heretofore unknown mobile communications technologies and network protocols, as long as a packet-switched data service is available therein for transmitting packetized information. For example, the wireless packet data service network 112 may comprise a General Packet Radio Service (GPRS) network that provides a packet radio access for mobile devices using the cellular infrastructure of a Global System for Mobile Communications (GSM)-based carrier network. In other implementations, the wireless packet data service network 112 may comprise an Enhanced Data Rates for GSM Evolution (EDGE) network, an Integrated Digital Enhanced Network (IDEN), a Code Division Multiple Access (CDMA) network, a Universal Mobile Telecommunications System (UMTS) network, or any 3^{rd} Generation (3G) network.

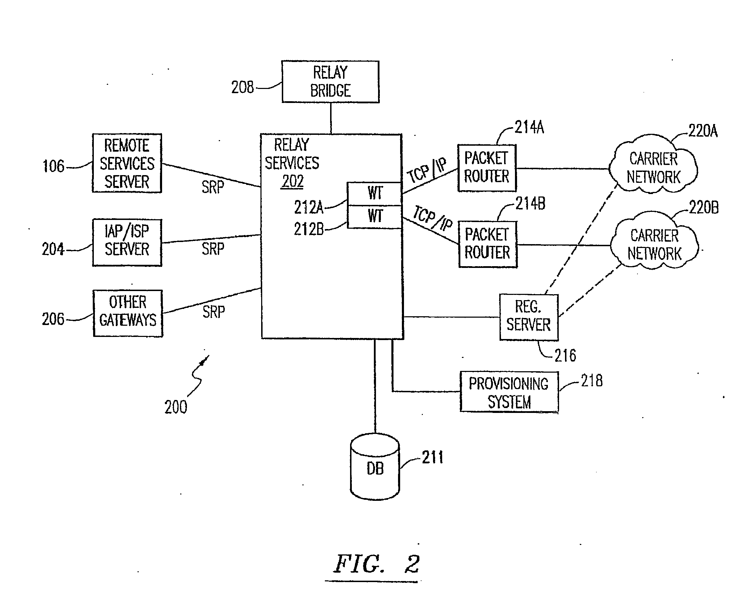

Reference is next made to Fig. 2, which shows additional details of an exemplary relay network infrastructure, indicated generally by reference 200, operable as part of the relay network 110 (Fig. 1) interfacing with the wireless packet data service network 112 described above. A relay service node 202 is operable, at least in part, for providing connectivity between the MCDs 116 and various data application services, for example, enterprise services, external IP data services, regardless of the geographic location of the MCDs 116 and their respective wireless carriers or service providers. Also, since multiple relay services nodes can co-exist in a distributed network architecture, a relay bridge 208 may be provided in operable connection with the relay services node 202 for supporting inter-relay connectivity. In one implementation, the relay bridge 208 connects with separate relay node sites, forming tunnels between relays over which messages from the MCD 116 can flow to and from services, irrespective of the region where the MCD 116 is located.

Communication between the relay services node 202 and various application gateways and servers is effectuated using any suitable protocol, for example, Server Relay Protocol (SRP), over IP links. By way of example, the remote services server 106 associated with the enterprise network 102 (shown in Fig. 1) communicates with the relay using SRP for effectuating internal data services with respect to the enterprise's mobile subscribers. Likewise, reference numerals 204 and 206 refer to external application gateways, such as Internet Service Provider (ISP) or Internet Access Provider (IAP) servers, and other gateways, respectively, which are also interfaced with the relay node 202 using SRP.

Additionally, a database 211 may be provided in operable connection with the relay node 202 for handling and managing location information for the mobile communications devices 116. As shown in Fig. 2, the relay network 200 includes a registration server 216. The registration server 216 handles administration and registration services for the MCDs 116, and is operable for providing registration services for MCDs 116 when they are initially activated or when the user re-registers, for example, due to moving to a different wireless network coverage area. In one implementation, the location information from the registration server 216 may be programmed into a MCD. When the MCD registers successfully, the registration server 216 is operable to provide the serving relay node's location, whereupon data sessions may be engaged by the MCD.

One or more wireless transport (WT) interfaces are provided as part of relay services node 202 for connecting with wireless carrier networks that provide subscription services to the MCDs, for example, voice and/or data transfer services. By way of example, WT 212A and 212B communicate with respective packet routers 214A and 214B using TCP/IP links, which route data packets to and from respective wireless packet data service networks, exemplified in Fig. 2 as carrier network 220A and carrier network 220B. The registration server 216 may be provided with separate WT and packet routing for interfacing and facilitating communications with the carrier networks 220A, 220B.

Referring again to Fig. 2, the relay network 200 includes a provisioning system (PRV) 218. The provisioning system 218 is co-located or otherwise associated with the relay services node 202 and is operable for setting up and managing various service providers (i.e. carrier networks), subscribers, MCD manufacturers, resellers, and other entities in order to support any number of service and market differentiation requirements. According to an embodiment, the trial service management mechanism is implemented in the provisioning system 218 as described in more detail below. The provisioning system 218 may be implemented with a plurality of interfaces for the various interfaces to registration servers, peer-to-peer servers, location databases, etc.

It will be appreciated by one skilled in the art that the various databases, service logic processing, and trial service management processing set forth above with respect to the relay network may be realized in suitable hardware, firmware/software and/or firmware/software logic blocks or in combination thereof. Furthermore, the functionality of the relay network may also be integrated within a wireless carrier network, whereby a "network node" may generally comprise the relay layer functionality as well.

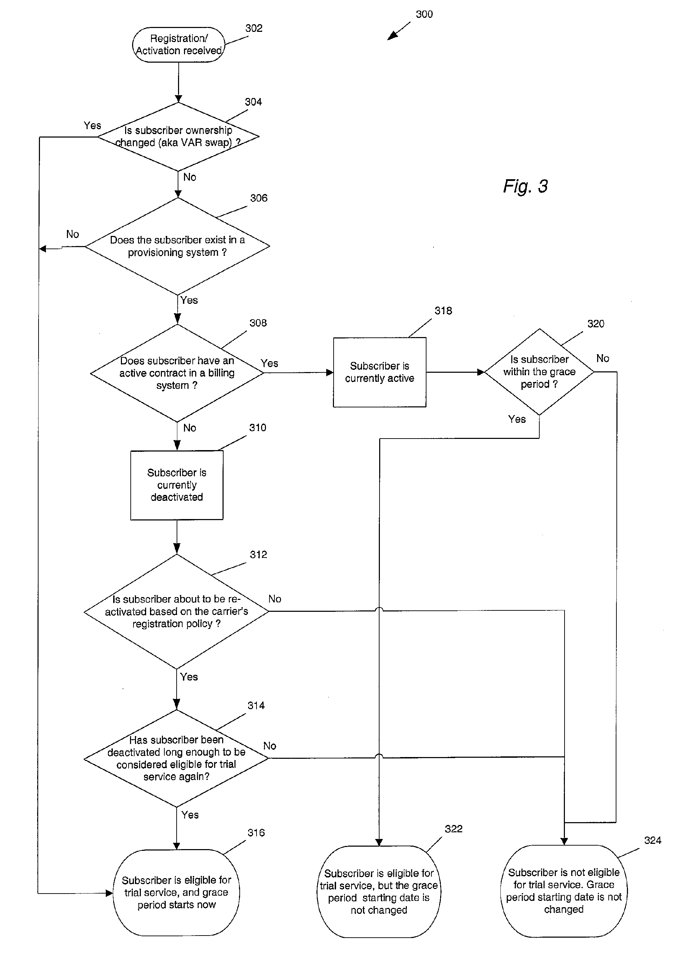

Reference is made to Fig. 3, which shows in flowchart form a process for managing a trial service subscription according to an embodiment and indicated generally by reference 300. According to this embodiment, the process 300 is triggered or invoked in response to a registration request or an activation request (i.e. a service pre-assignment request) being received from a user, for example, of a mobile communications device, as indicated by 302. A registration request is made, for example, when a device is first activated, or when the device re-registers, for example, due to moving to a different wireless network coverage area. A check is made in 304 if the registration is a result of the subscriber changing ownership, for example, as a result of a swap with a value added reseller or VAR. If yes, then according to this embodiment, the subscriber is eligible for trial service and a grace period starts to run for the subscriber, as indicated by 316. If subscriber ownership has not changed, then a check is made in 306 to determine if the subscriber exists in the provisioning system. As described above with reference to Fig. 2, the provisioning system 218 is operable for setting up and managing subscribers. If the subscriber does not exist in the provisioning system, then the subscriber is a "new" subscriber and eligible for trial service and a grace period is started in 316. If the subscriber does exist in the provisioning system, then a check is made in 308 to determine if the subscriber has an active contract, for example, by checking the billing system. If there is an active contract, then the subscriber is currently active 318 and a check is made in 320 to determine if the subscriber is still within the grace period. If the subscriber is still within the grace period, then the subscriber is eligible for continuing the trial service, but the grace period is not changed 322, i.e. it continues to run. On the other hand, if the subscriber is not in the grace period, i.e. the grace period has expired as determined in 320, then the subscriber is no longer eligible for a trial service 324.

Referring still to Fig. 3, if the subscriber does not have an active contract as determined in 308, then the subscriber is considered deactivated as indicated in 310. A check is made in 312 to determine if the subscriber is about to be re-activated, for example, based on the carrier's registration policy for inactive subscribers. If the subscriber is not eligible for reactivation, then the subscriber would also not be eligible for a trial service and therefore the grace period is not restarted in 324. On the other hand, if the subscriber is eligible for re-activation, a further check may be made at 314 to determine if the subscriber has been deactivated long enough, for example more than 12 months, to be considered eligible for another trial service subscription. If yes, then the subscriber is eligible for trial service, and the grace period is started in 316. If the subscriber is not eligible for the trial service again, for example, the subscriber has been deactivated for less than 12 months, then the grace period is not started in 324.

According to one embodiment, the mechanism for managing trial service subscriptions is implemented utilizing a Carrier Table in the provisioning system 218 (Fig. 2) and a SIMs (Subscriber Identification Module) Table. The Carrier Table includes information and properties about a particular carrier (or service provider), such as, billing identifier for the carrier, protocols, reply URL, registration policy, network type (e.g. GSM, GPRS), a carrier specified grace period. In accordance with an embodiment, the Carrier Table is configured and operable with a field *ts_grace_period,* i.e. the carrier specified grace period. In accordance with this embodiment, the unit of the field is "day" and the grace period can be varied for different carriers. The SIMs Table is configured and operable with a field *date_gp_start.* The field indicates the starting time of the grace period. If the field has a null value, then the grace period starting date is the same as the SIM's *date_created.* In known manner, the SIMs Table typically includes a *newuser_ interval* field, which is a carrier attribute that can be modified, for example, using a Web User Interface. When a SIM has been deactivated longer than the *newuser_interval* and then re-activated, the value, i.e. the date, for *date_gp_start* field is moved up to reflect the new starting time for the grace period. The value for the SIMs field *data_created* remains unchanged.

According to one embodiment, the trial service management mechanism operates as follows under the following exemplary scenarios for a subscriber:
(1) Reactivate Default Services for a Deactivated Subscriber
   If a carrier provides a trial service in its array of default services, then the trial service for the deactivated subscriber can be reactivated upon registration within the grace period, i.e. using the field *ts_grace_period.*
(2) Reactivate Deactivated Services for a Deactivated Subscriber
   If a deactivated subscriber's services include a trial service, then the trial service for the deactivated subscriber can be reactivated in response to a registration within the grace period, i.e. as defined by the field *ts_grace_period* for the carrier.
(3) Value Added Reseller (VAR) Change
   A trial service can be activated during a VAR change within the grace period as follows:
   - the new device registers without an EFGID (EF Group Identifier), and a carrier default service is activated
   - the device's EFGID is changed for the VAR and the device registers again; assume, for example, the VAR's default trial service is "Trial Service 30 Days"
   - if the registration occurs within the grace period (defined for the VAR), then the subscriber gets the trial service, e.g. "Trial Service 30 Days" It will be appreciated that if the VAR change occurs outside of the grace period, then the subscriber will receive the corresponding regular service offered by the VAR.
(4) Device Swap to a Branded Device
   According to another aspect, the trial service management mechanism provides the capability to activate a trial service during a device swap to a branded device within the grace period as follows:
   - the subscriber registers using device A (e.g. a mobile communications device), and a default service is activated
   - the subscriber changes from device A to a branded device B and registers with device B; if the subscribers registers within the grace period, then the carrier for the branded device B can provide a trial service
      Again, it will be appreciated that if the device swap (and registration) occurs after the grace period, then the branded device B will receive a regular service subscription from the carrier.
(5) Multiple Trial Services
   According to another aspect, the trial service management mechanism provides the capability to manage multiple trial services for a subscriber, provided the trial service(s) are activated with the defined grace period for the associated carrier.

The present invention may be embodied in other specific forms without departing from the spirit or essential characteristics thereof. Certain adaptations and modifications of the invention will be obvious to those skilled in the art. Therefore, the presently discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

**1.** A method for activating a trial service for a user of a mobile communications device, said method comprising the steps of:
determining if the user is a new user;
providing a trial service if the user qualifies as a new user;
wherein qualifying the user as a new user comprises determining if there is a billing identifier for the user in a provisioning system, and if an identification record was created for the user within a grace period.

**2.** The method as claimed in claim 1, wherein said step of qualifying comprises determining if an identification record was created for the user within a predetermined period and if the user is currently deactivated and has a billing identifier in the provisioning system.

**3.** The method as claimed in claim 1 or claim 2, wherein said billing identifier is based on presence of an active account for the user.

**4.** The method as claimed in any one of claims 1 to 3, wherein said identification record comprises a Subscriber Identification Module 'SIM' record.

**5.** The method as claimed in claim 1, wherein said step of qualifying comprises determining if the user is registered with the provisioning system and an identifier assigned to the user is changed for a new carrier and the user registers with the new carrier within a grace period.

**6.** The method as claimed in claim 5, wherein said new carrier comprises a value added reseller.

**7.** The method as claimed in claim 6, wherein a regular service is provided if said user registers with the new carrier outside of said grace period.

**8.** The method as claimed in claim 1, wherein a new user comprises a user acquiring a new mobile communications device and registering said new mobile communications device with the provisioning system within a predetermined period.

**9.** The method as claimed in claim 8, wherein said predetermined period comprises a grace period, and said grace period being defined by a carrier.

**10.** A system in a communications network for allocating a trial service to a user of a mobile communications device, said system comprising:
means for registering the user with a provisioning system in the communications network;
means for determining if the user is associated with a new subscription;
means for providing a trial service to the user if said subscription is new;
wherein said new subscription comprises a billing identifier in said provisioning system for the user, and an identification record being created for the user within a grace period.

**11.** The system as claimed in claim 10, wherein said new subscription comprises a billing identifier in said provisioning system with the user being currently deactivated and having an identification record created within a grace period.

**12.** The system as claimed in claim 11 or claim 12, wherein said grace period is associated with a service provider, and comprises at least one day up to a maximum number of days.

**13.** The system as claimed in claim 10, wherein said new subscription comprises an identifier assigned to the user and the user is registered with a new carrier within a grace period.

**14.** The system as claimed in claim 13, wherein said new carrier comprises a value added reseller.

**15.** The system as claimed in claim 14, further comprising means for providing a regular service if the user is registered with the new carrier outside of said grace period.

**16.** The system as claimed in any one of claims 10 to 15, wherein said means for providing a trial service comprises means for providing a plurality of trial services to a user having a new subscription.

**17.** A computer program product for managing a trial service for a user of a mobile communications device, the trial service and other services being allocated via a provisioning system, said computer program product comprising: a medium for storing computer-readable instructions which when executed by a computing device or system cause said device or system to perform the method of any one of claims 1 to 9.

**18.** A communications network comprising a plurality of mobile communication devices and the system of any one of claims 10 to 16 for allocating a trial service to a user of one of said plurality of mobile communications devices.

## Amended claims

### Amended claims in accordance with Rule 137(2) EPC.

**1.** A method for activating a trial of a service for a user of a mobile communications device, **characterized in that** said method includes the steps of:
determining if the user is a new user to the service;
providing a trial service if the user qualifies as a new user to the service;
wherein a user qualifies as a new user if there is no active billing identifier for the user in a provisioning system, or if an identification record was created for the user within a grace period.

**2.** The method as claimed in claim 1, wherein said step of qualifying comprises determining if an identification record was created for the user within a predetermined period and if the user is currently deactivated and has a billing identifier in the provisioning system.

**3.** The method as claimed in claim 1 or claim 2, wherein said billing identifier is based on presence of an active account for the user.

**4.** The method as claimed in any one of claims 1 to 3, wherein said identification record comprises a Subscriber Identification Module 'SIM' record.

**5.** The method as claimed in claim 1, wherein said step of qualifying comprises determining if the user is registered with the provisioning system and an identifier assigned to the user is changed for a new carrier and the user registers with the new carrier within the grace period.

**6.** The method as claimed in claim 5, wherein said new carrier comprises a value added reseller.

**7.** The method as claimed in claim 6, wherein a regular service is provided if said user registers with the new carrier outside of said grace period.

**8.** The method as claimed in claim 1, wherein a new user comprises a user acquiring a new mobile communications device and registering said new mobile communications device with the provisioning system within a predetermined period.

**9.** The method as claimed in claim 8, wherein said predetermined period comprises said grace period, and said grace period is defined by a carrier.

**10.** A system in a communications network for allocating a trial of a service to a user of a mobile communications device, said system comprising:
means for registering users with a provisioning system in the communications network, the registration including a billing identifier for each user and/or an identification record;
means for determining if a user is associated with a new subscription to the service;
means for providing a trial service to the user if said subscription is new;
wherein said determining means determines a subscription to be new if no active billing identifier exists in said provisioning system for the user, or an identification record has been created for the user within a grace period.

**11.** The system as claimed in claim 10, wherein said new subscription comprises a billing identifier in said provisioning system with the user being currently deactivated and having an identification record created within a grace period.

**12.** The system as claimed in claim 11 or claim 12, wherein said grace period is associated with a service provider, and comprises at least one day up to a maximum number of days.

**13.** The system as claimed in claim 10, wherein said new subscription comprises an identifier assigned to the user and the user is registered with a new carrier within a grace period.

**14.** The system as claimed in claim 13, wherein said new carrier comprises a value added reseller.

**15.** The system as claimed in claim 14, further comprising means for providing a regular service if the user is registered with the new carrier outside of said grace period.

**16.** The system as claimed in any one of claims 10 to 15, wherein said means for providing a trial service comprises means for providing a plurality of trial services to a user having a new subscription.

**17.** A computer program product for managing a trial service for a user of a mobile communications device, the trial service and other services being allocated via a provisioning system, said computer program product comprising: a medium for storing computer-readable instructions which when executed by a computing device or system cause said device or system to perform the method of any one of claims 1 to 9.

**18.** A communications network comprising a plurality of mobile communication devices and the system of any one of claims 10 to 16 for allocating a trial service to a user of one of said plurality of mobile communications devices.
